# EUROPEAN PATENT APPLICATION

(11) **EP 2 957 947 A1**
(43) Date of publication of application: **23.12.2015**
(21) Application number: 14172489.8
(22) Date of filing: 16.06.2014
(51) Int. Cl.: G02B 27/01

(54) **Image generating unit for a Head-up display and Head-up display**

(71) Applicant: Johnson Controls GmbH, 51399 Burscheid (DE)
(72) Inventor: Andreev, Dimitar, 1013 Sofia (BG)
(74) Representative: Finger, Catrin

(57) **Abstract**

The invention relates to an image generating unit (2) for a head-up display (1) comprising:
- a fixed light module (2.1) comprising at least one light source (2.1.1) adapted to emit light and an optical element adapted to direct the emitted light towards a display module (2.2),
- the display module (2.2) adapted to form an image based on the incident light from the light module (2.1) and to project the image into a view field of a user, wherein the display module (2.2) is rotatable around a transversal axis (A) with respect to the light module (2.1) so as to adjust the position of the projected image, and wherein,
- the light module (2.1) and the display module (2.2) are mechanically coupled by at least one connecting element (6.3)..

Furthermore, the invention relates to a head-up display (1).

## Description

The invention relates to an image generating unit for a head-up display. The invention further relates to a head-up display comprising such an image generating unit.

Head-up displays are devices which transparently display information into a view field of a user, basically without obscuring the scene within that view field so that the user may remain focused on that scene and also acquire displayed information. Head-up displays may for example be used in vehicles or aircraft. There exist a variety of kinds of head-up displays that differ in using optical paths of light.

It is an object of the present invention to provide an improved image generating unit for a head-up display and an improved head-up display.

The object is achieved by an image generating unit according to claim 1 and by a head up display according to claim 11.

Preferred embodiments of the invention are given in the dependent claims.

According to the invention, there is provided an image generating unit for a head-up display that comprises a fixed light module comprising at least one light source that is adapted to emit light and an optical element that is adapted to direct the emitted light towards a display module. The image generating unit further comprises the display module that is adapted to form an image based on the incident light from the light module and to project the image into a view field of a user, wherein the display module is rotatable around a transversal axis with respect to the light module so as to adjust the position of the projected image, and wherein the light module and the display module are mechanically coupled by at least one connecting element.

The connecting element enables to join the light module and the display module together as one unit for an easy assembly, whereby the display module is allowed to rotate with respect to the light module. For this purpose, the image generating unit is suited to couple with a variety of head-up displays using different optical paths. Rotating the display module means to tilt the display module at a certain angle. Preferably, the display module is rotated and thus adjusted before an assembly of the head-up display. Thus, an optical path of the projected image formed by the display module is adjustable regarding the optical path used by the head-up display.

In a preferred embodiment, the connecting element is designed as a web-like distance keeping element that is arranged between the light module and the display module in a manner that the light module and the display module are arranged spaced to each other. The space between the light module and the display module generates a ventilation pocket in order to decrease a temperature between the light module and the display module. Hence, the display unit is protected against overheating that may damage the display unit.

Preferably, the image generating unit comprises an inner housing that is adapted to cover the light module and the display module, wherein the inner housing comprises a first part that is adapted to cover the light module at least section-wise and a second part that is adapted to cover the display module at least section-wise. The at least one connecting element is mechanically coupled to the first part and the second part respectively. The inner housing covers and protects the light module and the display module respectively. Furthermore, the divided inner housing allows the display module to rotate with respect to the light module.

In one embodiment, the light module and the display module are mechanically coupled by two connecting elements that are arranged at two opposing sides of a front side of the first part. They may be fixed to the first part by positive-locking fit, frictional connection and/or adhesive bond. Alternatively, the connecting elements and the first part are designed as a single piece, whereby the connecting elements protrude from the front side of the first part towards the second part respectively. Likewise, the connecting elements and the second part may be designed as a single piece. Conceivably, there are provided more than two connecting elements.

In a preferred embodiment, the first part of the inner housing comprises a number of ventilation slots in order to avoid or at least to minimize an overheating between the light source and the optical element.

Preferably, the optical element comprises at least one collimator and/or at least one reflector. The collimator collimates the light emitted by the at least one light source. The at least one light source may comprise one or three light emitting diodes (LEDs) that are high speed controlled and multiplexed so as to sequentially emit light in order to sequentially generate images in the respective basic colour, e.g. red, green or blue, at such a rate that the inertia of the human vision creates the impression of a colour picture mixed by the three colours. The reflector directs the light towards the collimator or directly towards the display module in case of that the optical element comprises only the reflector.

Preferably, the light module comprises at least one control unit adapted to control the at least one light source. In particular, the control unit is arranged to adapt a brightness of the image depending on the ambient light conditions. The brightness of the image may be adapted by adjusting an input power of the light sources thereby controlling the power of the emitted light.

Furthermore, the light module may comprise at least one radiator that is adapted to decrease a temperature of the at least one light source and/or to decrease a temperature in an environment of the at least one light source. Therefore, the radiator is made of a good heat conducting material, which can be cooled by a cooling medium.

In an embodiment, the display module comprises a display unit and at least one optical filter. The optical filter is designed such that only the light emitted by the light source and thus the image formed by the display module are projected in the direction of the view field, whereas ambient light absorbed, transmitted or reflected in a direction other than the view field. Thereby, the optical filter may be formed of a photo-active, and / or photorefractive material, for example a polymer.

The display module is covered at least section-wise, i. e. frame like, by the second part. For fixing the display module within the second part, the second part comprises at least one fixing element. The fixing element may be designed as a clamping element, i. e. a clamp spring.

According to the invention, there is provided a head-up display comprising an image generating unit as it is described above, an outer housing that is adapted to cover at least the image generating unit and a combiner for displaying the projected image in a view field of a user. As opposed to conventional head-up displays using image generating devices with a fixed display module, costs of production, assembly and replacement of the head-up display are considerably decreasable.

The combiner of the head-up display is a transparent component arranged or arrangeable in the field of view of a user, e.g. a driver of the vehicle. The combiner may be made of glass or of plastics, e.g. optical grade polycarbonate, cyclic olefin copolymer or cyclo-olefin polymer. Additionally, the combiner may comprise an optically effective coating. The coating may be arranged for enhancing the reflectivity of the combiner in the visible spectrum.

The combiner may be a windshield of a vehicle or a separate transparent component arranged or arrangeable in the field of view of the user. In the latter case, the head-up display may comprise one or more drive units or kinematic modules which may electrically, pneumatically or hydraulically move the combiner into and out of the field of view. This movement may be controlled by user operation and/or automatically, e.g. if important information such as engine problems, low oil or coolant pressure or level etc. are to be brought to the user's attention.

In an embodiment of the invention at least one mirror may be arranged for folding the optical path between the display module and the combiner. This allows for a compact design of the head-up display in complex installation situations. The mirror may be arranged fixed or may be manually operated by a user.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: shows schematically a perspective view of a head-up display comprising an image generating unit, a mirror device and a combiner,
- Figure 2: shows schematically a side view of the image generating unit according to the invention,
- Figure 3: shows schematically a further perspective view of the image generating unit according to the invention,
- Figure 4: shows schematically a further perspective view of the image generating unit according to the invention,
- Figure 5: shows schematically a further perspective view of the image generating unit according to the invention,

Corresponding parts are marked with the same reference symbols in all figures.

### Detailed Description of Preferred Embodiments

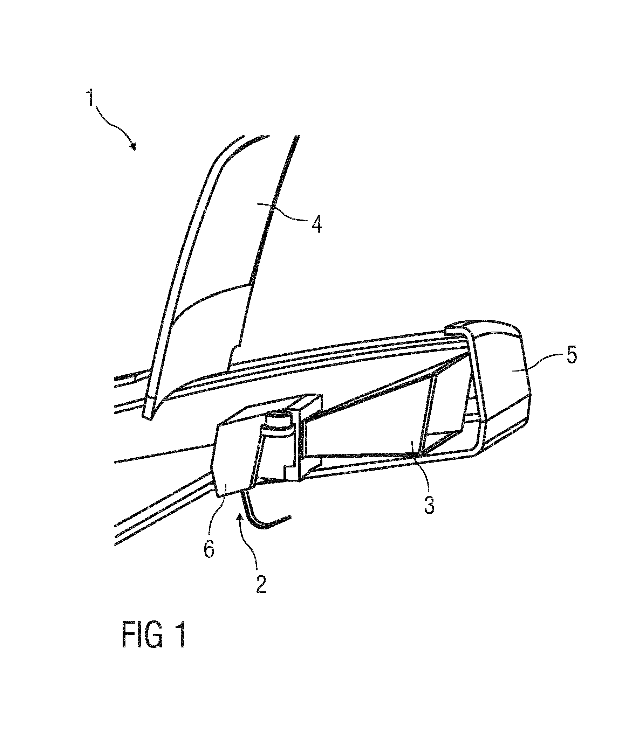

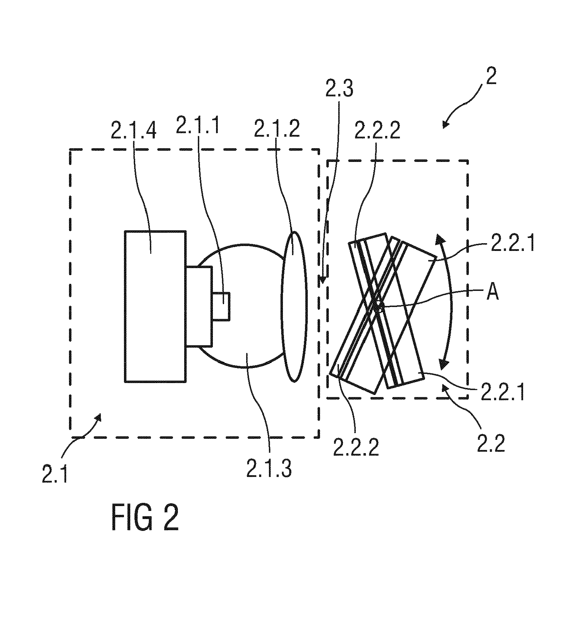

Figure 1 shows a perspective view of a head-up display 1 comprising an image generating unit 2, a mirror device 3 and a combiner 4, whereby the image generating unit 2 and the mirror device 4 are shown by a cut out of an outer housing 5 of the head-up display 1. Figure 2 shows a schematic side view of the image generating unit 2.

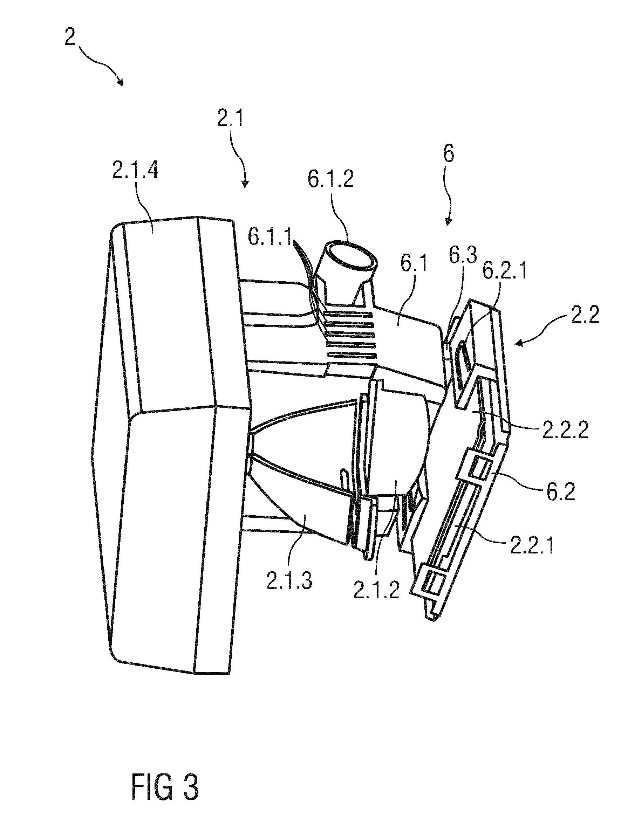

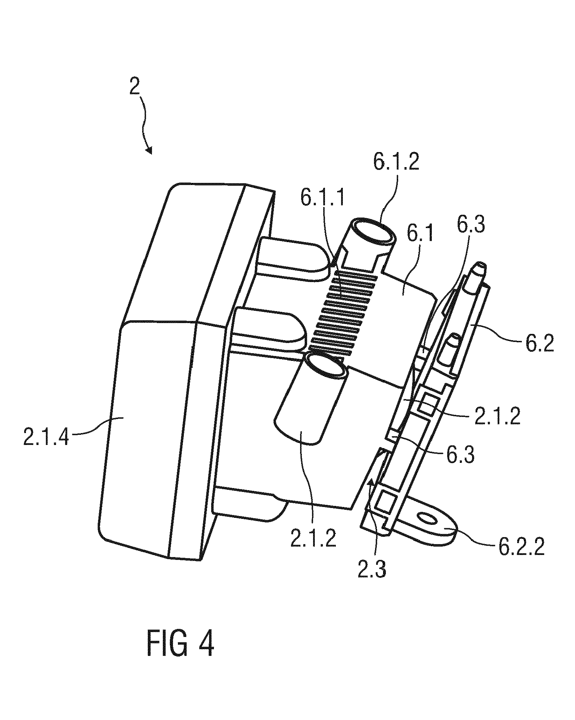

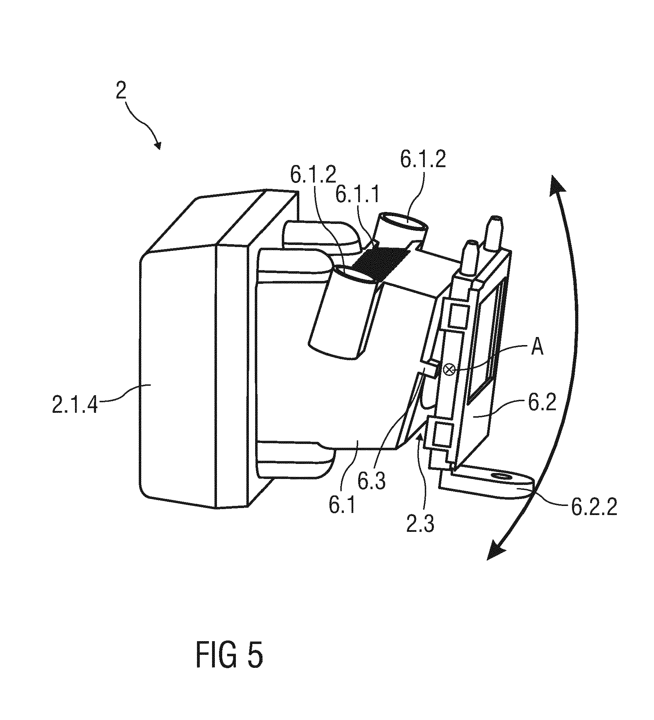

The image generating unit 2 is covered by an inner housing 6 and comprises a light module 2.1 and a display module 2.2. The inner housing 6 will be described later in more detail by the figures 3 to 5.

The light module 2.1 comprises a light source 2.1.1, a collimator 2.1.2, a reflector 2.1.3 and a radiator 2.1.4.

The light source 2.1.1 may comprise one or three light emitting diodes, each one arranged to emit light in one of the basic colours red, green or blue, wherein the basic colour of each light emitting diode is different from the basic colour of the others.

The collimator 2.1.2 narrows the light emitted by the light source 2.1.1 in a manner that the emitted light is focused towards the display module 2.2. The collimator 2.1.2 may consist of a curved mirror or lens in order to achieve a homogeneous light distribution. The reflector 2.1.3 reflects the emitted light towards the collimator 2.1.2. Alternatively, the light module 2.1 only comprises a collimator 2.1.2 without a reflector 2.1.3 or the other way around.

The radiator 2.1.4 is arranged to decrease a temperature of the light source 2.1.1. Therefore, the radiator 2.1.4 is made of a good heat conducting material, which may be cooled by a cooling medium. The radiator 2.1.4 is not arranged within the inner housing 6 but mechanically coupled with it.

Furthermore, the light module 2.1 comprises a not shown control unit that is coupled with the light source 2.1.1 for multiplexing the light emitting diodes so as to sequentially emit light thus creating a field-sequential colour system, whereby the emitted light is directed towards the display module 2.2 to form an image.

The display module 2.2 comprises a display unit 2.2.1 and an optical filter 2.2.2. Here, the narrowed light is applied to the display unit, i. e. in the form of a light transmissive liquid crystal display. For example, the display unit 2.2.1 is designed as a thin film transistor - display (TFT - display). The display unit 2.2.1 forms an image based on the incident light from the light source 2.1 and projects the image towards the mirror device 3 or in case of that the head-up display 1 comprises no mirror device 3 directly towards the combiner 4.

The optical filter 2.2.2 is arranged faced towards the light source 2.1.1 so as to avoid or at least minimize incident sunlight and/or ambient light, thus no secondary image or phantom image are generated. Thereby, the optical filter 2.2.2 may be formed of a photo-active, and / or photorefractive material, for example a polymer.

The display unit 2.2.1 and the optical filter 2.2.2 may be designed as one piece that is rotatable around a transversal axis A with respect to the fixed light module 2.1, whereby the transversal axis A is substantially perpendicular to a direction of incident light from the light module 2.1. The rotation of the display module 2.2 is shown in figure 3.

By rotation of the display module 2.2, the display module 2.2 is tilted in a certain angle for adjusting the position of the projected image within a view field of a user, e. g. a driver of a vehicle. Different head-up displays may differ in the optical path of the projected image.

As it is shown in figure 1, the head-up display 1 comprises the mirror device 3 that folds the optical path of the projected image. Therefore, the mirror device 3 may be flat, concave or convex in order to adjust the size of the projected image and may be made of plastics or glass. In another not shown embodiment, the head-up display 1 may comprise no mirror device 3 so that the image is directly projected towards the combiner 4. With the rotatable display module 2.2, the image generating unit 2 is universally applicable for a variety of head-up displays using different optical paths.

The projected image is magnified by the combiner 4 or with other words reflected by the combiner 4 such that the user perceives the image at a distance behind the combiner 4. In this case the combiner 4, although basically transparent, is arranged as a mirror, however with a reflectance considerably below total reflection. The combiner 4 may be flat, convex, concave or free-form and made of plastics or glass and be equipped with an optically effective coating. A drive unit or kinematic (not illustrated) may be arranged for selectively moving, e.g. folding the combiner 4 into or out of the field of view. Alternatively, the combiner 4 is a windshield of a vehicle.

Referring to figure 1, the outer housing 5 covers the image generating unit 2 and the mirror device 3. The outer housing 5 may be designed as an optically transparent component or may comprise certain recesses to realize an optical connection between the display module 2.2 and the combiner 4 or between the mirror device 3 and the combiner 4.

The figures 3 to 5 show different perspective views of the image generating unit 2, whereby in figure 3 the light module 2.1 and the display module 2.2 are shown by a cut out of the inner housing 6.

The inner housing 6 comprises a first part 6.1 and a second part 6.2. The first part 6.1 covers the light module 2.1 section wise, whereby the light module 2.1 is arranged fixed within the inner housing 6. Particularly, the light source 2.1.1, the collimator 2.1.2 and the reflector 2.1.3 are covered and fixed in position by the first part 6.1, whereby a front side of the first part 6.1 faced towards the display module 2.2 is recessed so as to enable an optical connection between the collimator 2.1.2 and the display module 2.2.

The radiator 2.1.4 is mechanically coupled with the first part 6.1, i. e. by positive-locking fit, frictional connection and/or adhesive bond.

The first part 6.1 comprises a number of ventilation slots 6.1.1 that are designed as recesses in a top wall of the first part 6.1 arranged parallel to each other in the direction of the transversal axis A. The ventilation slots 6.1.1 decrease a temperature between the light source 2.1.1 and the collimator 2.1.2 in order to avoid or at least to minimize an overheating between the light source 2.1.1 and the collimator 2.1.2.

Furthermore, the first part 6.1 comprises fixing arrangements 6.1.2 to fix the inner housing 6 to the outer housing 5.

The present embodiments of the figures 3 to 5 show two fixing elements 6.1.2 that are designed as hollow cylinders each arranged on a side wall of the first part 6.1 and substantially projecting along a high alignment of the inner housing 6.

The first part 6.1 is connected to the second part 6.2 by two connecting elements 6.3 that are arranged on opposing sides of a front side of the first part 6.1 that is faced towards the second part 6.2. The connecting elements 6.3 may be connected to the front side of the first part 6.1 by positive-locking fit, frictional connection and/or adhesive bond. Alternatively, the connecting elements 6.3 and the first part 6.1 are designed as a single piece, whereby the connecting elements 6.3 project axially from the front side of the first part 6.1 towards the second part 6.2. It is also conceivable that the second part 6.2 and the connecting elements 6.3 are designed as a single piece. Otherwise, the connecting elements 6.3 are connected to the second part 6.2 by positive-locking fit, frictional connection and/or adhesive bond respectively.

The connecting elements 6.3 are designed as web-like distance keepers between the light module 2.1 and the display module 2.2. The space between the first part 6.1 and the second part 6.2 generates a ventilation pocket 2.3 in order to provide a decrease of a temperature between the light module 2.1 and the display module 2.2, because a high temperature may damage the display unit 2.2.1 irreversibly. The connecting elements 6.3 may be made of plastics to realize certain flexibility so that the display module 2.2 is allowed to rotate with respect to the light module 2.1. Alternatively, the connecting elements 6.3 are made of metal and connected to the first part 6.1 and the second part 6.2 in an articulated way.

The second part 6.2 covers the display unit 2.2.1 and the optical filter 2.2.2 frame-like so that the display unit 2.2.1 receives light from the light module 2.1 as well as project an image towards the mirror device 3 or directly towards the combiner 4.

The second part 6.2 comprises two fixing elements 6.2.1 that fix the display unit 2.2.1 and the filter 2.2.2 within the second part 6.2. Referring to figure 3, the fixing elements 6.2.1 are respectively designed as a u-shaped clamp spring in a manner to realize a clamping connection between the display module 2.2 and the second part 6.2.

The second part 6.2 further comprises a flange 6.2.2 with a recess that is centrally arranged within the flange 6.2.2. The flange 6.2.2 is fixed to the outer housing 5 (not shown) in order to define an angle for rotation of the display module 2.2 and to fix the tilted display module 2.2 to the outer housing 5 after rotation.

### List of References

- 1: head-up display
- 2: image generating unit
- 2.1: light module
- 2.1.1: light source
- 2.1.2: collimator
- 2.1.3: reflector
- 2.1.4: radiator
- 2.2: display module
- 2.2.1: display unit
- 2.2.2: optical filter
- 2.3: ventilation pocket
- 3: mirror device
- 4: combiner
- 5: outer housing
- 6: inner housing
- 6.1: first part
- 6.1.1: ventilation slot
- 6.1.2: fixing arrangement
- 6.2: second part
- 6.2.1: fixing element
- 6.2.2: flange
- 6.3: connecting element

- A: transversal axis

## Claims

1. Image generating unit (2) for a head-up display (1) comprising:
- a fixed light module (2.1) comprising at least one light source (2.1.1) adapted to emit light and an optical element adapted to direct the emitted light towards a display module (2.2),
- the display module (2.2) adapted to form an image based on the incident light from the light module (2.1) and to project the image into a view field of a user, wherein the display module (2.2) is rotatable around a transversal axis (A) with respect to the light module (2.1) so as to adjust the position of the projected image, and wherein,
- the light module (2.1) and the display module (2.2) are mechanically coupled by at least one connecting element (6.3).

2. Image generating unit (2) according to claim 1,
**characterized in that** the connecting element (6.3) is designed as a web-like distance keeping element that is arranged between the light module (2.1) and the display module (2.2).

3. Image generating unit (2) according to claim 1 or 2,
**characterized by** an inner housing (6) that is adapted to cover the light module (2.1) and the display module (2.2), wherein the inner housing (6) comprises:
- a first part (6.1) adapted to cover the light module (2.1) at least section-wise,
- a second part (6.2) adapted to cover the display module (2.2) at least section-wise, whereby the at least one connecting element (6.3) is mechanically coupled to the first part (6.1) and the second part (6.2) respectively.

4. Image generating unit (2) according to one of the preceding claims, **characterized by** two connecting elements (6.3) arranged at two opposing sides of a front side of the first part (6.1).

5. Image generating unit (2) according to claim 3 or 4, **characterized in that** the first part (6.1) comprises a number of ventilation slots (6.1.1).

6. Image generating unit (2) according to one of the preceding claims, **characterized in that** the optical element (2.1.2, 2.1.3) comprises at least one collimator (2.1.2) and/or at least one reflector (2.1.3).

7. Image generating unit (2) according to one of the preceding claims, **characterized in that** the light module (2.1) comprises at least one control unit adapted to control the at least one light source (2.1.1).

8. Image generating unit (2) according to one of the preceding claims, **characterized in that** the light module (2.1) comprises at least one radiator (2.1.4) adapted to decrease a temperature of the at least one light source (2.1.1) and/or to decrease a temperature in an environment of the at least one light source (2.1.1).

9. Image generating unit (2) according to one of the preceding claims, **characterized in that** the display module (2.2) comprises a display unit (2.2.1) and at least one optical filter (2.2.2).

10. Image generating unit (2) according to one of the claims 3 to 9, **characterized in that** the second part (6.2) comprises at least one fixing element (6.2.1) so as to fix the display module (2.2) within the second part (6.2).

11. Head-up display (1) comprising:
- an image generating unit (2) according to one of the claims 1 to 7,
- an outer housing (5) that is adapted to cover at least the image generating unit (2) and
- a combiner (4) for displaying the projected image in a view field of a user.

12. Head-up display (1) according to claim 11,
**characterized in that** the combiner (4) is a transparent component arranged or arrangeable in the field of view of a user.

13. Head-up display (1) according to claim 11 or 12,
**characterized in that** the combiner (4) is a windshield of a vehicle.

14. Head-up display (1) according to claim 11 or 12,
**characterized in that** the combiner (4) is a transparent component that is movable into or out of the field of view.

15. Head-up display (1) according to one of the claims 11 to 14, **characterized by** comprising at least one mirror device (3) that is adapted to fold an optical path between the display module (2.2) and the combiner (4).
